# EUROPÄISCHE PATENTANMELDUNG

(11) **EP 0 789 225 A1**
(43) Veröffentlichungstag der Anmeldung: **13.08.1997**
(21) Anmeldenummer: 97101428.7
(22) Anmeldetag: 30.01.1997
(51) Int. Cl.: G01C 21/20, G05D 1/02, B62D 1/28, G08G 1/0968

(54) **Verfahren zur Ermittlung einer Strassenkrümmung aus digital abgelegten Karteninformationen**

(30) Priorität: 07.02.1996 DE 19604364
(71) Anmelder: Volkswagen Aktiengesellschaft, 38436 Wolfsburg (DE); Fraunhofer Institut, 80636 München (DE)
(72) Erfinder: Hamberger, Werner, Dipl.-Ing., 76327 Pfinztal-Söllingen (DE); Struck, Günter, Dipl.-Ing., 76337 Waldbronn (DE)

(57) **Zusammenfassung**

Es wird ein Verfahren zur Ermittlung einer Straßenkrümmung aus digital abgelegten Karteninformationen beschrieben, wobei die digitalen Karteninformationen zumindest aus Koordinatenpunkten (N1 bis N5) bestehen, die den Verlauf der Straße kennzeichnen.

Gemäß der Erfindung wird die so abgespeicherte Straße in Segmente (Z1, Z2, Z3, Z5) zerlegt, wobei jeder digital abgelegten Koordinatenpunkt (N2, N3, N5) sowohl Endpunkt eines Segmentes als auch Anfangspunkt des nachfolgenden Segmentes ist. In dem darauffolgenden Verfahrensschritt wird ermittelt, welche Segmente (Z2, Z3) einem Bereich einer elementaren Kurve angehören. Ausgehend von dem Anfangspunkt (N2) des ersten zu einer elementaren Kurve gehörenden Segmentes (Z2) wird mindestens eine geometrische Form (d) unter Einbeziehung mindestens eines folgenden Stützpunktes (N3, N5) erzeugt, deren Krümmung als Krümmung der jeweiligen elementaren Kurve gesetzt wird. Aus dieser Krümmung wird danach der entsprechende Kurvenradius (R) ermittelt.

## Beschreibung

Die Erfindung betrifft ein Verfahren zur Ermittlung einer Straßenkrümmung aus digital abgelegten Karteninformationen, wobei die digitalen Karteninformationen zumindest aus Koordinatenpunkten bestehen, die den Verlauf der Straße kennzeichnen.

Aus der deutschen Offenlegungsschrift DE 195 06 364 A1 ist ein Fahrzeugsteuersystem zum Steuern eines Fahrzeuges bezüglich einer Form einer Straße bekannt, auf der das Fahrzeug fährt, und das die Form der Straße auf Basis einer Karteninformation eines Navigationsgerätes, die aus einer Mehrzahl die Straße bildenden Koordinatenpunkten gebildet ist, erfaßt.

Dabei werden verschiedene Möglichkeiten der Erfassung der Form einer Straße in Abhängigkeit des jeweiligen Fahrzeugsteuersystems beschrieben. In einer Variante werden vier Bezugspunkte zum Erfassen der Straßenform aus den digital abgelegten Karteninformation extrahiert. Der zweite Bezugspunkt wird auf die Position des Kraftfahrzeuges gesetzt. Der dritte Bezugspunkt ist auf eine Position um die gleiche Distanz vor dem zweiten Bezugspunkt gelegt und der vierte Bezugspunkt liegt im gleichen Abstand vor dem dritten Bezugspunkt auf der Straße. Die Distanz zwischen zwei Bezugspunkten entspricht jeweils einem Produkt aus der Fahrgeschwindigkeit und einer vorbestimmten Zeit. Wenn kein Bezugspunkt an einer Position vorhanden ist, die durch ein Mehrfaches der aus der Fahrgeschwindigkeit bestimmten Distanz auf Basis einer virtuellen Position des Kraftfahrzeuges eingerichtet ist, d. h. an der Position keine Straße vorhanden ist, werden die dieser Position nächsten Punkte als Bezugspunkte extrahiert. Zusätzlich, wenn die Daten der vorhandenen Bezugspunkte grob sind und kein Bezugspunkt im Bereich der aus der Fahrgeschwindigkeit bestimmten Distanz vorhanden ist, werden ebenfalls die darauffolgenden vier Bezugspunkte ausgewählt.

Ist die Form der Straße gekrümmt und liegen die vier Bezugspunkte im wesentlichen auf einem Kreisbogen, dann wird ein Winkel der Drehung des Kraftfahrzeuges von dem zweiten Bezugsknoten zum dritten Bezugsknoten durch Ermittlung von Vektoren, die die Bezugspunkte miteinander verbinden, bestimmt. In einem nachfolgenden Schritt wird aus den durch die einzelnen Vektoren gebildeten Winkel der Krümmungsradius der Straße ermittelt.

Bei einer weiteren beschriebenen Variante zur Bestimmung der Form der Straße wird eine virtuelle Position des Kraftfahrzeuges auf eine Position gesetzt, die um eine vorher gelesenen Distanz vor der Position des Kraftfahrzeuges liegt und der zweite Bezugspunkt wird auf die virtuelle Position des Fahrzeuges gesetzt. Die vorher gelesene Distanz ist dabei eine Distanz, mit der das Fahrzeug innerhalb einer vorbestimmten Zeit bei Geschwindigkeitsminderung mit einer vorbestimmten Verzögerung aus der Fahrgeschwindigkeit heraus angehalten werden kann. In einer weiteren Variante der Erfassung der Form der Straße werden statt der vier Bezugspunkte jeweils drei Bezugspunkte verwendet.

Bei dem beschriebenen Fahrzeugsteuersystem wird die Form der Straße bezüglich der jeweiligen Steuerung (Lenkwinkelsteuerung, Geschwindigkeitssteuerung) auf einer anderen Art und Weise erfaßt.

Die Aufgabe der Erfindung ist es, ein allgemeines Verfahren zur Ermittlung einer Straßenkrümmung aus digital abgelegten Karteninformationen zu schaffen, wobei die Ermittlung des Krümmungsradiuses für alle späteren Anwendungsfälle gleich sein soll.

Die Aufgabe wird durch die Merkmale des Patentanspruchs gelöst. Vorteilhafte Aus- und Weiterbildungen der Erfindung sind in den Unteransprüchen beschrieben.

Gemäß der Erfindung wird die Straße in Segmente zerlegt, wobei jeder digital abgelegte Koordinatenpunkt sowohl Endpunkt eines Segments als auch Anfangspunkt des nachfolgenden Segmentes ist. In dem darauffolgenden Verfahrensschritt wird ermittelt, welche Segmente einem Bereich einer elementaren Kurve angehören, wobei die Bereiche einer elementaren Kurve gemäß einer bevorzugten Ausbildung über die Winkel zwischen aufeinanderfolgenden Segmenten und die Länge der Segmente ermittelt wird.

Ausgehend von dem Anfangspunkt des ersten zu einer elementaren Kurve gehörenden Segmentes wird mindestens eine geometrische Form unter Einbeziehung mindestens eines folgenden Stützpunktes erzeugt, deren Krümmung als Krümmung der jeweiligen elementaren Kurve gesetzt wird. Aus der Krümmung der elementaren Kurve bzw. den Krümmungen, wenn sich die elementare Kurve aus mehreren geometrischen Formen zusammensetzt, wird die jeweilige Krümmung als Inverse des Kurvenradiuses bzw. der Kurvenradien berechnet.

Eine solche geometrische Form kann beispielsweise ein Kreisbogen, eine Parabel, eine Hyperbel oder ein Klothoide sein.

Für den Einsatz der ermittelten Straßenkrümmung in den unterschiedlichsten Fahrzeugsteuerungen, wie sie beispielsweise in den Patentanmeldungen DE 195 45 826 und DE 195 36 012 beschrieben sind, wird gemäß einer Weiterbildung der Erfindung die aktuelle Fahrzeugposition auf der momentan befahrenen Straße ermittelt. Ausgehend von der aktuellen Fahrzeugposition werden zukünftig befahrene Straßenabschnitte unter Berücksichtigung zusätzlicher Informationsdaten der digitalen Karte und Parametern des Fahrzeugs ermittelt. Solche Informationen können beispielsweise der Zielpunkt des Fahrzeuges, die Richtung einer Einbahnstraße, die Fahrtrichtungsvorgabe des Fahrers, die Kategorie oder der Abbiegewinkel des nächsten Straßenabschnittes sein.

Aufgrund der Fahrzeugposition und eventuell des zukünftig befahrenen Straßenabschnittes wird der Abstand von der aktuellen Fahrzeugposition zu dem Anfangspunkt des ersten zu der nächsten elementaren Kurve gehörenden Segmentes ermittelt.

Bei einer ausschließlich auf GPS basierenden Erfassung der Fahrzeugposition, erfolgt diese in einem ersten Schritt in einem geographischen Koordinatensystem. Ausgehend von der Fahrzeugposition im geographischen Koordinatensystem werden Straßenabschnitte im Bereich dieser Fahrzeugposition mittels der digital abgelegten Karteninformationen gesucht, die eine Fahrzeugspur enthalten, deren Richtung innerhalb eines Toleranzbereichs mit der aktuellen Fahrtrichtung übereinstimmt, und über eine senkrechte Projektion der Fahrzeugposition im geographischen Koordinatensystem die aktuelle Fahrzeugposition auf der befahrenen Straße ermittelt.

Für eine vorausschauende Fahrzeugsteuerung ist nach einer vorteilhaften Weiterbildung der Erfindung vorgesehen, die Krümmung bzw. den Kurvenradius gleichzeitig mehrerer aufeinanderfolgender elementaren Kurven zu ermitteln.

Nachfolgend wird die Erfindung anhand eines Ausführungsbeispieles näher beschrieben. Die zugehörigen Zeichnungen zeigen:
- Figur 1: eine Darstellung der Positionsermittlung,
- Figur 2: eine Darstellung über die Vorhersage zukünftig befahrener Straßenabschnitte und
- Figur 3: eine Darstellung der Ermittlung von Straßenkrümmungen.

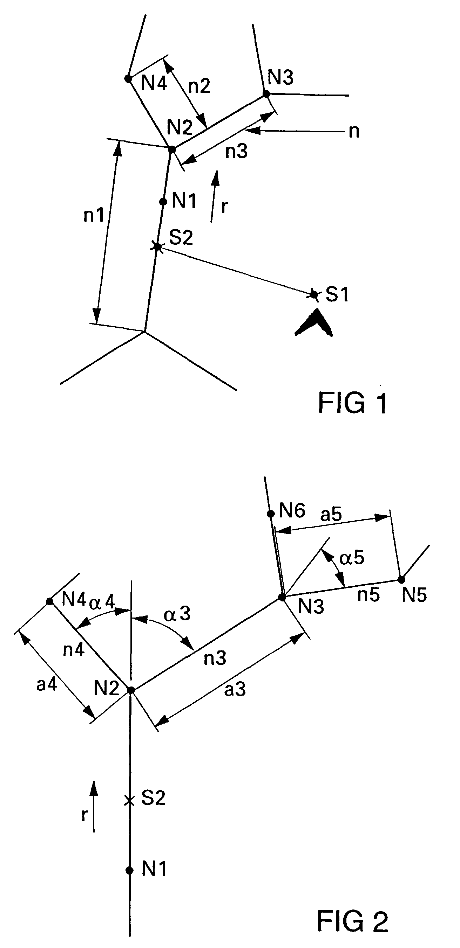

Voraussetzung für die Anwendung des erfindungsgemäßen Verfahrens ist ein Fahrzeug, das mit einem Navigationssystem ausgerüstet ist, welches laufend die aktuelle Fahrzeugposition S1 in einem geographischen Koordinatensystem ermittelt. Außerdem werden digital abgelegte Karteninformationen des Straßennetzes n zumindest in Form von Koordinatenpunkten N1 bis N4, die den Verlauf der Straßen kennzeichnen, benötigt. In einem ersten Schritt wird die aktuelle Fahrzeugposition S2 im Verlauf der Straßen aus der durch das Navigationssystem erfaßten Fahrzeugposition S1 im geographischen Koordinatensystem ermittelt. Diese Ermittlung ist in Figur 1 näher dargestellt. Ausgehend von der Fahrzeugposition S1 im geographischen Koordinatensystem und der Ausrichtung gegenüber Norden wird derjenige Straßenabschnitt n1 in der Nähe der geographischen Fahrzeugposition S1 gesucht, der eine befahrbare Fahrspur (z. B. nicht gegen eine Einbahnstraße) aufweist, dessen Richtung innerhalb eines Toleranzbereiches mit der aktuellen Fahrzeugrichtung r übereinstimmt. Auf diesem Straßenabschnitt n1 wird durch eine senkrechte Projektion die aktuelle Fahrzeugposition S2 auf der befahrenen Straße ermittelt.

Ausgehend von diesem Straßenabschnitt n1 werden während der anschließenden Fahrt die Nachbarabschnitte n2, n3 zur Verfolgung der Fahrzeugposition S2 innerhalb des Straßennetzes beobachtet. Sollte sich durch diese Verfolgung die geographische Fahrzeugposition S1 von der Fahrzeugposition S2 über einen vorgegebenen Toleranzbereich hinaus entfernen, so wird automatisch eine erneute Initialisierung der aktuellen Fahrzeugposition S2 vorgenommen.

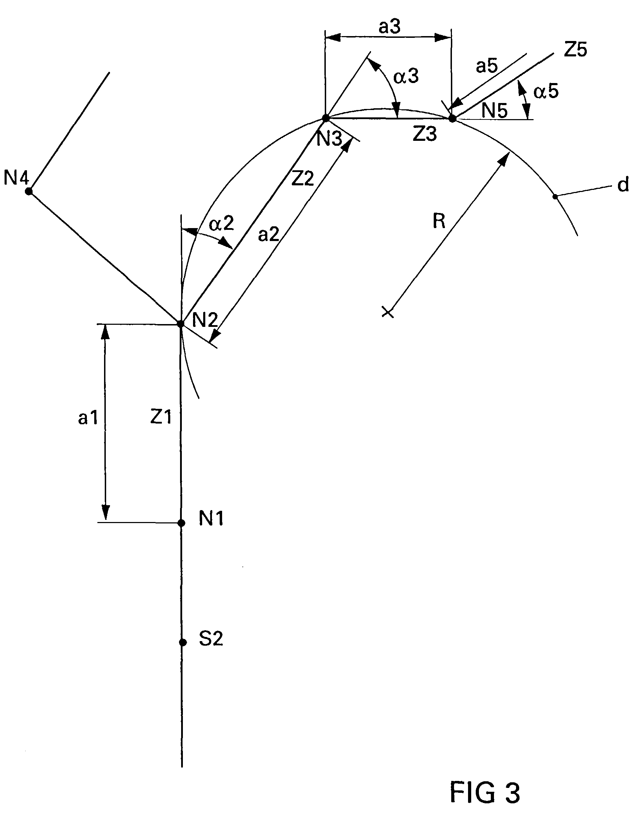

In Abhängigkeit von der ermittelten Fahrzeugposition S2 werden über die Koordinatenpunkte N2 bis N6 zukünftig befahrene Straßenabschnitte n3, n4 bestimmt, dabei werden im vorliegenden Ausführungsbeispiel zu jedem Koordinatenpunkt N2 bis N6 die benachbarten Koordinatenpunkte mit Abständen a3, a4 und Abbiegewinkeln α3, α4 bestimmt. Die Figur 2 gibt dazu einen Abschnitt einer Straßenkarte an. Abgesehen von dem trivialen Fall, daß ein Koordinatenpunkt N1 in Fahrtrichtung r nur einen Nachbarn N2 hat, können an einer Kreuzung (Koordinatenpunkt N2) mit mehreren benachbarten Koordinatenpunkten N4 und N3 zusätzlich Informationsdaten der digital abgelegten Karte zur Ermittlung des wahrscheinlichsten Nachbarn N4 oder N3 verwendet werden. Eine einfache Unterscheidung ist möglich, wenn beispielsweise der Straßenabschnitt n4 eine Einbahnstraße entgegen der Fahrtrichtung r ist. Als weiteres Unterscheidungskriterium läßt sich die Kategorie des nächsten Straßenabschnittes n3, n4 verwenden. Des weiteren können bestimmte Parameter des Fahrzeuges bzw. Einstellungen am Fahrzeug für die Ermittlung des zukünftig befahrenen Straßenabschnittes verwendet werden. Hat der Fahrer seine gewünschte Fahrtrichtung angezeigt (im Ausführungsbeispiel nach rechts), dann wird an dem Koordinatenpunkt N2 mit den benachbarten Koordinatenpunkten N3 und N4, der entsprechende Koordinatenpunkt N3 für die weiteren Ermittlungen verwendet. Wenn alle bisherigen Regeln noch zu keinem Ergebnis geführt haben, dann wird der Straßenabschnitt mit dem absolut kleinsten Abbiegewinkel zum jeweiligen Straßenabschnitt verwendet. Als Ergebnis steht eine unidirektionale Liste von beispielsweise Koordinatenpunkten N2, N3, N5 mit den jeweiligen Abständen a₃ und a₅ vom Vorgänger und den entsprechenden Abbiegewinkeln α3 und α5 für die weitere Verarbeitung zur Verfügung. Die Liste aus Koordinatenpunkten N1, N2, N3, N5, die die künftig befahrene Strecke beschreiben, wird in Segmente Z1, Z2, Z3, Z5 zerlegt (Figur 3), dabei ist jeder Koordinatenpunkt sowohl Abschluß eines Segmentes Z als auch Beginn des nachfolgenden Segmentes. Zur Trennung von Bereichen einer elementaren Kurve, z. B. gerader Straßenabschnitte oder in einer Richtung gekrümmter Straßenabschnitte, werden die folgenden Kennzeichen:
- Vorzeichenwechsel des Winkels zwischen den einzelnen Segmenten,
- abrupte Änderung der Länge aufeinanderfolgender Segmente und
- große Länge einzelner Segmente
verwendet. Zur stabilen Erkennung eines Vorzeichenwechsels und damit des Beginns einer neuen elementaren Kurve werden die Segmente entlang der Liste der Koordinatenpunkte N1, N2, N3, N5 nach links, geradeaus und nach rechts eingestuft. Ein gerader Bereich umfaßt alle Segmente Z mit einem Winkel zum vorangegangenen Segment unterhalb eines definierten Schwellwertes. Zu einem solchen geraden Bereich gehören im Ausführungsbeispiel die Koordinatenpunkte N1 und N2. Segmente Z5 mit einem negativen Winkel α5 werden in einen nach links gekrümmten Bereich einer elementaren Kurve, Segmente Z2, Z3 mit einem positiven Winkel α2, α3 werden in einen nach rechts gekrümmten Bereich eingestuft. Um das Ende eines gekrümmten Bereichs zu erkennen, wird das Längenverhältnis der Segmente Z nach und vor einem Koordinatenpunkt N1, N2, N3, N5 ausgewertet. Weiterhin wird die absolute Länge a1, a2, a3, a5 einzelner Segmente zur Klassifizierung verwendet, beispielsweise werden ab einer vorgebbaren Länge diese Segmente als gerader Bereich eingestuft. Die einzelnen Klassifizierungsergebnisse führen dazu, daß die vorhergesagte Fahrroute in bestimmte Bereiche einer elementaren Kurve eingeteilt wird, wobei für die weitere Verarbeitung, insbesondere die korrekte Erkennung des den Anfang der Bereiche kennzeichnenden Koordinatenpunkts N2 von Bedeutung ist. Ausgehend von diesem Koordinatenpunkt wird unter Einbeziehung mindestens zweier folgender Koordinatenpunkte N3, N5 als Stützpunkte mindestens eine geometrische Form erzeugt. Im Ausführungsbeispiel wird als einzige geometrische Form ein Kreisbogen d verwendet, dessen Radius R als Kurvenradius der entsprechenden Fahrzeugsteuerung übergeben wird.

### BEZUGSZEICHENLISTE

- N1 bis N6: Koordinatenpunkte
- n: Straßennetz
- S1: Fahrzeugposition im geographischen Koordinatensystem
- S2: Fahrzeugposition im Verlauf der Straße
- n1 bis n5: Straßenabschnitte
- r: Fahrzeugrichtung
- a1 bis a5: Abstände
- α2 bis α5: Abbiegewinkel, Winkel zwischen zwei Segmenten
- Z1, Z2, Z3, Z5: Segment
- R: Radius
- d: Kreisbogen

## Patentansprüche

1. Verfahren zur Ermittlung einer Straßenkrümmung aus digital abgelegten Karteninformationen, wobei die digitalen Karteninformationen zumindest aus Koordinatenpunkten (N1 bis N6) besteht, die den Verlauf der Straße (n) kennzeichnen,
mit folgenden Verfahrensschritten:
- Zerlegung der Straße in Segmente (Z1, Z2, Z3, Z5), wobei jeder Koordinatenpunkt (N1, N2, N3, N5) sowohl Endpunkt eines Segmentes als auch Anfangspunkt des nachfolgenden Segmentes ist,
- Ermittlung, welche Segmente (Z2, Z3) einem Bereich einer elementaren Kurve angehören,
- ausgehend von dem Anfangspunkt (N2) des ersten zu einer elementaren Kurve gehörenden Segmentes (Z2) Erzeugung mindestens einer geometrischen Form (d) unter Einbeziehung mindestens eines folgenden Koordinatenpunktes (N3, N5), deren Krümmung als Krümmung der jeweiligen elementaren Kurve gesetzt wird.

2. Verfahren nach Anspruch 1, dadurch gekennzeichnet, daß aus der ermittelten Krümmung der Kurvenradius (R) der elementaren Kurve ermittelt wird.

3. Verfahren nach Anspruch 1 oder 2, dadurch gekennzeichnet, daß die Bereiche einer elementaren Kurve gerade Straßenabschnitte oder in eine Richtung gekrümmte Straßenabschnitte sind.

4. Verfahren nach Anspruch 3, dadurch gekennzeichnet, daß die Bereiche einer elementaren Kurve über die Winkel (α2, α3, α4, α5) zwischen zwei aufeinanderfolgenden Segmenten und die Länge (a1, a2, a3, a4, a5) der Segmente ermittelt wird.

5. Verfahren nach einem der Ansprüche 1 bis 4, dadurch gekennzeichnet, daß die geometrische Form (d) ein Kreisbogen, eine Parabel, eine Hyperbel oder ein Klothoide ist.

6. Verfahren nach einem der Ansprüche 1 bis 5, dadurch gekennzeichnet, daß die aktuelle Fahrzeugposition (S2) auf der befahrenen Straße ermittelt wird.

7. Verfahren nach Anspruch 6, dadurch gekennzeichnet, daß ausgehend von der aktuellen Fahrzeugposition (S2) zukünftig befahrene Straßenabschnitte unter Berücksichtigung zusätzlicher Informationsdaten der digital abgelegten Karte und Parametern des Fahrzeuges ermittelt werden.

8. Verfahren nach Anspruch 6 oder 7, dadurch gekennzeichnet, daß der Abstand von der aktuellen Fahrzeugposition (S2) auf der befahrenen Straße zu dem Anfangspunkt (N2) des ersten zu einer elementaren Kurve gehörenden Segments (Z2) ermittelt wird.

9. Verfahren nach einem der Ansprüche 6 bis 8, dadurch gekennzeichnet, daß die Fahrzeugposition (S1) in einem geographischen Koordinatensystem ermittelt wird, ausgehend von der Fahrzeugposition (S1) im geographische Koordinatensystem Straßenabschnitte (n1) im Bereich dieser Fahrzeugposition gesucht werden, die eine Fahrzeugspur enthalten, deren Richtung innerhalb eines Toleranzbereichs mit der aktuellen Fahrtrichtung übereinstimmt, und über eine senkrechte Projektion der Fahrzeugposition im geographischen Koordinatensystem die aktuelle Fahrzeugposition (S2) auf der befahrenen Straße (n) ermittelt wird.

10. Verfahren nach einem der Ansprüche 1 bis 9, dadurch gekennzeichnet, daß die Krümmung mehrerer aufeinanderfolgender elementarer Kurven gleichzeitig ermittelt wird.
